# EUROPÄISCHE PATENTSCHRIFT

(11) **EP 0 392 272 B1**
(45) Veröffentlichungstag und Bekanntmachung des Hinweises auf die Patenterteilung: **04.09.1996**
(21) Anmeldenummer: 90105995.6
(22) Anmeldetag: 29.03.1990
(51) Int. Cl.: G01F 1/42

(54) **Vorrichtung zur Messung und/oder Steuerung des Durchflusses und/oder von Wärmemengen**
Measuring and/or controlling device for fluid flow and/or quantities of heat
Dispositif de mesure et/ou de contrôle de débit et/ou de quantités de chaleur

(30) Priorität: 03.04.1989 CH 1214/89; 08.03.1990 CH 745/90
(43) Veröffentlichungstag der Anmeldung: 17.10.1990
(73) Patentinhaber: Landis & Gyr Technology Innovation AG, CH-6301 Zug (CH)
(72) Erfinder: Ries, Peter, Dr., CH-5734 Reinach (CH); Nauer, Paul, CH-6312 Steinhausen (CH); Wolfgang, Huber, CH-6330 Cham (CH)
(74) Vertreter: Müller, Hans-Jürgen, Dipl.-Ing.

(56) Entgegenhaltungen:
- EP-A- 0 086 259
- EP-A- 0 219 489
- EP-A- 0 309 643
- DE-A- 1 473 411
- DE-A- 2 414 713
- DE-A- 3 312 140
- DE-A- 3 700 898
- DE-C- 839 870
- FR-A- 1 340 463
- GB-A- 2 026 704
- NL-A- 8 600 247
- US-A- 2 944 420
- US-A- 4 750 464
- Polytechnisch tijdschrift vol. 27, no. 25, 06 Dezember 1972, NL Seiten 828 - 832; G.H. Gaasbeek: "Snelheids- en debietmetingen voor hydraulica en afvoerhydrologie"
- ENGINEERING, MATERIALS AND DESIGN. vol. 19, no. 12, Dezember 1975, LONDON GB Seite 42 "Sliding valve with segmented orifice operates efficiently over full range of flow"

## Beschreibung

Die Erfindung bezieht sich auf eine Vorrichtung der im Oberbegriff des Anspruchs 1 genannten Gattung.

Eine derartige Vorrichtung ist bereits aus DE-A-3 700 898 bekannt. Bei einer anderen bekannten Vorrichtung (EP-A-0 309 643) sind die Mittel zur Erfassung der Druckdifferenz des Druckes vor dem Drosselorgan einerseits und des Druckes hinter dem Drosselorgan andererseits innerhalb des Schließkörpers eines stetig wirksamen Regelventils angeordnet. Zum Auswerten von Erfassungsdaten dient ein Rechner, welcher Differenzier-, Multiplizier- und Integrationsglieder aufweist. Der Antrieb des Drosselorgans ist beispielsweise durch einen Synchronmotor steuerbar in Abhängigkeit von der Anzahl von Stellimpulsen.

Entsprechende stetig wirksame Regelventile sind auch aus DE-A-1 423 906, FR-A-1 340 463, "Engineering Material and Design, Band 19, Seite 241", und EP-A-0 086 259 bekannt. Die Messung der tatsächlichen Druckdifferenz vermeidet jedoch nicht das Problem, das bei sehr geringen Durchflüssen und/oder sehr kleinen Temperaturdifferenzen entsteht. Auf derartige Meßfehler und die damit verbundenen Probleme wird bereits hingewiesen in "Fernwärme International", 1988, Seite 23-35. Dieses Problem ist vor allem in Übergangszeiten häufig extrem geringer Durchflüsse und/oder Temperaturdifferenzen bedeutsam, welcher außerhalb der Meßbereiche der Erfassungsmittel liegen.

Schließlich ist auch ein Verfahren und eine Einrichtung zur örtlichen Regelung flüssigkeitsdurchströmter Heizflächen sowie zur Messung der Heizarbeit bekannt (DE-A-3 312 140), bei welchem zur Messung der Wärmemenge die Differenz der Vorlauftemperatur und der Rücklauftemperatur eines Heizkreises mit dem zeitlichen Öffnungsverhältnis eines AUF-ZU-Ventils sowie mit einem Eichwert für den Durchfluß miteinander verknüpft werden. Die Steuerung des Ventils erfolgt von einem Raum-Temperaturfühler.

Der Erfindung liegt die Aufgabe zugrunde, eine Vorrichtung der eingangs genannten Art, bei der gleichzeitig der Durchfluß- und/oder Wärmemengenstrom gesteuert und meßtechnisch erfaßt werden kann, auf einfache Weise und kostengünstig zu verbessern.

Die genannte Aufgabe wird bei einer Vorrichtung der gattungsgemäßen Art durch die im Kennzeichen des Anspruchs 1 angegebenen Merkmale gelöst. Vorteilhafte Ausgestaltungen ergeben sich aus den Unteransprüchen.

Nachfolgend werden Ausführungsbeispiele der Erfindung anhand der Zeichnung näher erläutert. Es zeigen:
- Fig. 1: ein Blockschema einer Vorrichtung mit einem zweistufigen Drosselorgan,
- Fig. 2: ein Blockschema einer Vorrichtung mit einem dreistufigen Drosselorgan,
- Fig. 3: ein schaltbares Drosselorgan mit drei Stufen,
- Fig. 4: ein schaltbares Drosselorgan mit einer Meßvorrichtung zur Erfassung der Druckdifferenz und
- Fig. 5: ein schaltbares Drosselorgan mit einer Meßvorrichtung zur Erfassung der Druckdifferenz in der Schließstellung.

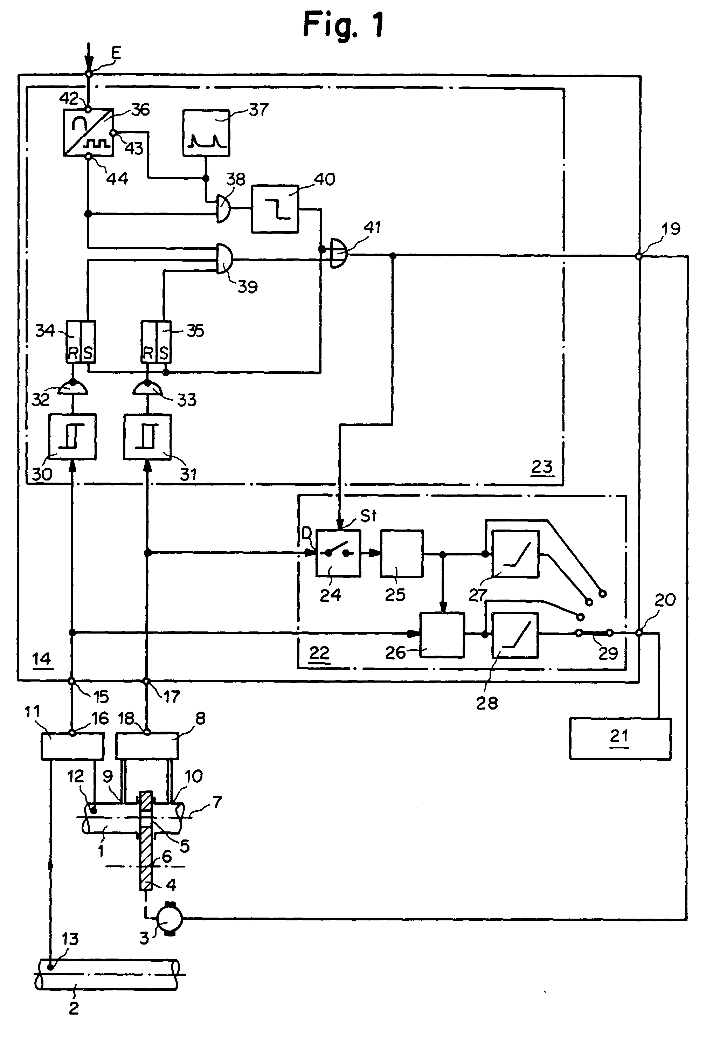

In der Fig. 1 bedeutet 1 eine Vorlaufleitung und 2 eine Rücklaufleitung eines Heizkreises. In der Vorlaufleitung 1 ist ein von einem Antrieb 3 betätigtes Drosselorgan 4 eingebaut. Dieses Drosselorgan 4 besitzt eine Öffnung 5, die in der gezeichneten Stellung, nachfolgend als Stellung I bezeichnet, wirksam ist. Dabei ist das Drosselorgan 4 offen und gibt den Durchfluß frei. Das Drosselorgan 4 hat eine zweite Stellung, in der die Achse 6 mit der Mittelachse 7 der Vorlaufleitung 1 fluchtet. In dieser zweiten Stellung ist das Drosselorgan 4 geschlossen und damit der Durchfluß unterbrochen. Diese Stellung wird nachfolgend als Stellung 0 bezeichnet.

Mit 8 ist ein Differenzdrucksensor bezeichnet, der über eine erste Öffnung 9 mit dem Raum vor dem Drosselorgan 4 und über eine zweite Öffnung 10 mit dem Raum hinter dem Drosselorgan 4 verbunden ist.

Mit 11 ist ein Temperaturdifferenz-Erfassungsglied bezeichnet, das die Temperatur des Mediums in der Vorlaufleitung 1 mittels einer ersten Meßstelle 12 und in der Rücklaufleitung 2 mittels einer zweiten Meßstelle 13 erfaßt und daraus die Temperaturdifferenz zwischen Vorlaufleitung 1 und Rücklaufleitung 2 bildet.

Mit 14 ist ein Rechner bezeichnet, der einen Eingang E besitzt, an den ein stetiges Steuersignal anlegbar ist. Der Rechner 14 verfügt über einen zweiten Eingang 15, der mit einem Ausgang 16 des Temperaturdifferenz-Erfassungsglieds 11 verbunden ist, und über einen dritten Eingang 17, der mit einem Ausgang 18 des Differenzdrucksensors 8 verbunden ist. Der Rechner 14 besitzt außerdem einen ersten Ausgang 19, der mit dem Antrieb 3 verbunden ist, und einen zweiten Ausgang 20, an den eine Anzeige 21 angeschlossen ist.

Nachfolgend wird der interne Aufbau des Rechners 14 symbolisch beschrieben. Diese Beschreibung beruht auf einem analogen Rechner. Ebenso gut kann der Rechner 14 ein digitaler Rechner sein. Dessen Funktionen lassen sich aus der Beschreibung des analogen Rechners ohne weiteres ableiten. Selbstverständlich sind bei einem digitalen Rechner an den Ein- und Ausgängen Analog-Digital-Wandler bzw. Digital-Analog-Wandler vorhanden.

Der Rechner 14 besteht aus einem im wesentlichen der Berechnung von Durchfluß- und Wärmemengen-Kennzahlen dienenden Rechenblock 22 und einem im wesentlichen der Steuerung des Drosselorgans 4 dienenden Steuerblock 23.

Der Rechenblock 22 umfaßt einen Analogschalter 24, einen ersten Multiplizierer 25, einen zweiten Multiplizierer 26, einen ersten Integrator 27, einen zweiten Integrator 28 und einen Umschalter 29.

Der Steuerblock 23 umfaßt einen ersten Schwellwertschalter 30, einen zweiten Schwellwertschalter 31, einen ersten Inverter 32, einen zweiten Inverter 33, ein erstes Flipflop 34, ein zweites Flipflop 35, einen Wandler 36, einen Taktgeber 37, ein Zweifach-UND-Glied 38, ein Dreifach-UND-Glied 39, ein Verzögerungsglied 40, welches eine Abfallverzögerung bewirkt und somit ein HIGH-Signal verlängert, und ein ODER-Glied 41.

Vom Eingang 15 des Rechners 14 führt eine Verbindung zum Eingang des Schwellwertschalters 30 und zum Eingang des Multiplizierer 26. Der Eingang 17 des Rechners 14 ist mit dem Eingang des Schwellwertschalters 31 und einem Dateneingang D des Analogschalters 24 verbunden, dessen Steuereingang St eine Verbindung zum Ausgang des ODER-Glieds 41 aufweist. Der Ausgang des Analogschalters 24 wirkt auf den Eingang des Multiplizierers 25, dessen Ausgang einerseits zum zweiten Eingang des Multiplizierers 26, andererseits zum Eingang des Integrators 27 und außerdem zu einen ersten Kontakt des Umschalters 29 führt. Der Ausgang des Integrators 27 ist mit einem zweiten Kontakt des Umschalters 29 verbunden. In gleicher Weise besteht eine Verbindung zwischen dem Ausgang des Multiplizierers 26 und einem dritten Kontakt des Umschalters 29 sowie mit dem Eingang des Integrators 28. Dessen Ausgang ist mit einem vierten Kontakt des Umschalters 29 verbunden. Der Mittelkontakt des Umschalters 29 führt zum Ausgang 20.

Innerhalb des Steuerblocks 23 führt der Ausgang des Schwellwertschalters 30 über den Inverter 32 zum Reset-Eingang R des Flipflops 34 und analog dazu der Ausgang des Schwellwertschalters 31 über den Inverter 33 zum Reset-Eingang R des Flipflops 35.

Der Schwellwertschalter 31 hat folgendes Schaltverhalten: Unterhalb eines Differenzdrucks p_{Uaus} hat sein Ausgang LOW-Signal. Bei steigendem Wert des Differenzdrucks wechselt sein Ausgangssignal von LOW auf HIGH, sobald der Differenzdruck über den oberen Schwellenwert p_{Uein} steigt, und bei dann fallendem Wert des Differenzdrucks wechselt sein Ausgangssignal von HIGH auf LOW, sobald der Differenzdruck wieder unter den unteren Schwellenwert p_{Uaus} fällt. Es besteht also eine Hysterese der Größe p_{Uein} - p_{Uaus}.

Der Schwellwertschalter 30 hat folgendes Schaltverhalten: Unterhalb einer Temperaturdifferenz T_{Uaus} hat sein Ausgang LOW-Signal. Bei steigendem Wert der Temperaturdifferenz wechselt sein Ausgangssignal von LOW auf HIGH, sobald die Temperaturdifferenz über den oberen Schwellenwert T_{Uein} steigt, und bei dann fallendem Wert der Temperaturdifferenz wechselt sein Ausgangssignal von HIGH auf LOW, sobald die Temparaturdifferenz wieder unter den unteren Schwellenwert T_{Uaus} fällt. Es besteht also eine Hysterese der Größe T_{Uein} - T_{Uaus}.

Der Wandler 36 wandelt das wegen einer Verbindung zwischen dem Eingang E des Rechners 14 und seinem ersten Eingang 42 an diesem anstehende stetige Steuersignal in ein Puls-Pause-Signal (HIGH-LOW), wobei der zeitliche Ablauf, nämlich der Beginn eines Pulses, vom an seinem zweiten Eingang 43 anstehenden Signal des Taktgebers 37 bestimmt wird. Am Ausgang 44 des Wandlers 36 steht dann das synchronisierte Puls-Pause-Signal zur Verfügung. Diese Synchronisation hat den Vorteil, daß ein dauerndes kurzfristiges Schalten verhindert werden kann.

Dieser Ausgang 44 und der Ausgang des Taktgebers 37 führen auf die beiden Eingänge des UND-Glieds 38, der Ausgang 44 außerdem auf einen ersten Eingang des UND-Glieds 39, dessen weitere Eingänge mit dem Ausgang des Flipflops 34 bzw. dem Ausgang des Flipflops 35 verbunden sind.

Der Eingang des Verzögerungsglieds 40 liegt am Ausgang des UND-Glieds 38 und sein Ausgang führt einerseits zu einem Eingang des ODER-Glieds 41 und andererseits zu den beiden Set-Eingängen S der Flipflops 34 und 35. Schließlich sind der Ausgang des UND-Glieds 39 mit dem zweiten Eingang des ODER-Glieds 41 und der Ausgang des ODER-Glieds 41 mit dem Ausgang 19 verbunden.

Nachfolgend wird die Funktion dieser Vorrichtung beschrieben. Es sei angenommen, das Drosselorgan 4 befinde sich in der in der Fig. 1 gezeigten Stellung, bei der die Öffnung 5 wirksam ist. Diese Stellung wird als Stellung I bezeichnet. Das Ausgangssignal des Differenzdrucksensors 8 gelangt an den Dateneingang D des Analogschalters 24. An dessen Steuereingang St liegt ein Signal an, das darüber Auskunft gibt, ob sich das Drosselorgan 4 in der Stellung 0 oder in der Stellung I befindet. Dieses Signal ist in der Stellung I HIGH. Später wird noch beschrieben, wie das Signal und dessen Wechsel zustandekommt. Ist das Signal am Eingang St HIGH, so ist der Analogschalter 24 eingeschaltet und das Datensignal erscheint am Ausgang des Analogschalters 24. Ist jedoch das Signal am Eingang St LOW, so ist der Analogschalter ausgeschaltet und das Datensignal erscheint am Ausgang des Analogschalters 24 nicht. Stattdessen hat der Ausgang des Analogschalters 24 ein Signal, das dem Wert Null entspricht. Das Ausgangssignal des Analogschalters 24 gelangt auf den Eingang des Multiplizierers 25. Im Multiplizierer 25 ist zur Stellung I des Drosselorgangs 4 ein den Durchfluß in der jeweiligen Stellung charakterisierender Beiwert abgespeichert. Der Multiplizierer 25 multipliziert nun diesen Beiwert mit dem Signal des Differenzdrucksensors 8 und ermittelt so eine Durchfluß-Kenngröße. Diese Durchfluß-Kenngröße steht am Ausgang des Multiplizierers 25 an und wird dann von der Anzeige 21 angezeigt, wenn sich der Umschalter 29 in der entsprechenden Stellung befindet. Die Durchfluß-Kenngröße wird außerdem dem Integrator 27 zugeführt. Am Ausgang des Integrators 27 steht ein Signal an, das dem kumulierten Durchfluß entspricht. Dieser Wert kann ebenfalls angezeigt werden, wenn sich der Umschalter 29 in der entsprechenden Stellung befindet.

Das Ausgangssignal des Temperaturdifferenz-Erfassungsglieds 11 gelangt auf den ersten Eingang des Multiplizierers 26, an dessen zweitem Eingang die Durchfluß-Kenngröße anliegt. Der Multiplizierer 26 multipliziert im wesentlichen diese beiden Größen, woraus sich der Wärmestrom ergibt, der am Ausgang des Multiplizierers 26 ansteht und angezeigt werden kann, wenn sich der Umschalter 29 in der entsprechenden Stellung befindet. Das Ausgangssignal des Multiplizierers 26 wird außerdem dem Integrator 28 zugeführt, in dem der Wärmestrom zur Wärmemenge kumuliert wird. Auch diese Wärmemenge kann angezeigt werden, wenn sich der Umschalter 29 in der entsprechenden Stellung befindet. Diese Stellung ist in der Fig. 1 dargestellt.

Der Umschalter 29 kann taktgesteuert sein. Damit ist es möglich, zyklisch hintereinander die folgenden Meßwerte anzuzeigen: Durchflußrate, beispielsweise in Liter/Stunde, kumulierte Durchflußmenge, beispielsweise in Kubikmeter, Wärmestrom, beispielsweise in Kilojoule/Stunde und Wärmemenge, beispielsweise in Kilowattstunden.

Nachfolgend wird beschrieben, wie die Wärmemenge und/oder der Durchfluß gesteuert werden kann. Zur Steuerung der Wärmemenge bzw. des Durchflusses wird auf den Eingang E des Rechners 14 und damit auf den Eingang 42 des Wandlers 36 ein stetiges Signal gegeben, das der abzugebenden Wärmemenge bzw. dem Durchfluß proportional ist. Dieses Signal, beispielsweise eine Spannung von 0 bis 10 Volt, kann zum Beispiel vom einem übergeordneten Heizungsregler stammen. Der Wandler 36 formt dieses stetige Signal nun in ein Puls-Pause-Signal um. Je größer die abzugebende Wärmemenge bzw. der Durchfluß sein soll, desto größer ist das stetige Signal und desto länger sind die einzelnen vom Wandler 36 abgegebenen Pulse und desto kürzer sind die Pulspausen. Puls heißt, daß am Ausgang 44 HIGH-Signal anliegt, während Pause bedeutet, daß an diesem Ausgang LOW-Signal anliegt. Die Puls-Pausen-Folge, abgeleitet aus dem stetigen Eingangssignal, wird durch den Taktgeber 37 synchronisiert. Ein Ausgangs-Puls beginnt immer erst dann, wenn vom Taktgeber 37 ein Impuls eintrifft.

Es sei nun angenommen, am Eingang E liege ein Signal 0,8 entsprechend beispielsweise 8 Volt an, d. h., die Öffnungszeit des Drosselorgans 4 soll 80 % sein. Mit dem Eintreffen eines kurzen Pulses vom Taktgeber 37 erscheint nun am Ausgang 44 HIGH-Signal. Somit sind beide Eingänge des UND-Glieds 38 HIGH und damit auch dessen Ausgang. Der am Verzögerungsglied 40 eintreffende Impuls wird durch dieses verlängert. Über das ODER-Glied 41 gelangt der HIGH-Puls auf den Ausgang 19, wodurch der Antrieb 3 das Drosselorgan 4 in die Offen-Stellung (Stellung I) steuert. Durch den LOW-HIGH-Wechsel werden aber gleichzeitig auch die beiden Flipflops 34 und 35 gesetzt, wodurch deren Ausgänge auf HIGH-Pegel wechseln. Dieses HIGH-Signal bleibt erhalten, bis die Flipflops 34 und 35 zurückgesetzt werden, was später beschrieben wird. Durch das HIGH-Signal an den von den Flipflops 34 und 35 ist das UND-Glied 39 dafür vorbereitet, den HIGH-Pegel des Eingangs 44 passieren zu lassen. Der Ausgang des UND-Glieds 39 hat also HIGH-Pegel. Damit bleibt der Antrieb 3 auch nach Wegfall des Pulses vom Taktgeber 37 und nach Ablauf der durch das Verzögerungsglied 40 bewirkten Verzögerung erregt und hält das Drosselorgan 4 offen. Dieser Zustand bleibt erhalten, solange der Ausgang 44 HIGH-Pegel hat, es sei denn, zuvor werde eines der Flipflops 34 oder 35 zurückgesetzt.

Ist das Pulsende eines Pulses am Ausgang 44 erreicht, wechselt der Ausgang des UND-Glieds 39 auf LOW-Pegel. Liegt kein Takt vom Taktgeber 37 vor, - dieser gibt nur etwa aller 15 Minuten einen Impuls ab -, so wechselt dann auch der Ausgang des ODER-Glieds 41 auf LOW, weil jetzt beide Eingänge LOW-Pegel haben. In der Folge wird der Antrieb 3 nicht mehr erregt und das Drosselorgan geht in die Stellung 0 (geschlossen).

Durch das UND-Glied 38 wird im übrigen erreicht, daß der Taktgeber 37 allein das Drosselorgan 4 nicht öffnen kann. Nur dann, wenn das Eingangssignal am Eingang E von Null verschieden ist, so daß auch am Ausgang 44 ein Puls erscheint, kann das Drosselorgan öffnen.

Auf die eben beschriebene Weise kann das Drosselorgan 4 in Abhängigkeit vom Signal am Eingang E gesteuert werden. Ist das Eingangssignal 0, bleibt das Drosselorgan 4 dauernd geschlossen; ist das Eingangssignal 1, bleibt das Drosselorgan dauernd geöffnet, es sei denn, eines der Flipflops 35, 35 sei zurückgesetzt, was später beschrieben wird. Bei von 0 und 1 verschiedenen Werten wird das Drosselorgan 4 für eine je nach Größe des Signals verschiedene Zeitdauer geöffnet. Damit kann also die Wärmemenge beliebig gesteuert werden. Gleichzeitig werden die Kenngrößen für Durchfluß und Wärmemenge vom Rechenblock 22 wie vorher beschrieben ermittelt.

Ein besonderer Fall tritt ein, wenn die Druckdifferenz am Differenzdrucksensor 8 unter den Wert p_{Uaus} fällt. Der Differenzdruck p_{Uaus} charakterisiert dabei die untere Erfassungsgrenze genügender Genauigkeit. Fällt der Differenzdruck unter diesen Wert, wechselt der Ausgang des Schwellwertschalters 31 von HIGH auf LOW. Deshalb wechselt das Signal am Ausgang des Inverters 33 von LOW auf HIGH und durch die Flanke LOW-HIGH wird das Flipflop 35 zurückgesetzt. Dessen Ausgang wechselt nun auf LOW. Damit wechselt auch das Signal am Ausgang des UND-Glieds 39 auf LOW und ebenfalls das Signal am Ausgang des ODER-Glieds 41, solange kein nächster Taktimpuls vom Taktgeber 37 erscheint. Der Antrieb 3 wird nun von einem LOW-Signal angesteuert, so daß er das Drosselorgan 4 in die Stellung 0 (geschlossen) bewegt.

Nach diesem Wechsel von der Stellung I in die Stellung steht nun bei geschlossenem Drosselorgan 4 wieder ein Differenzdruck unbestimmter Größe über dem Drosselorgan 4, was vom Differenzdrucksensor 8 erfaßt wird. Trotzdem wird nun auch dann, wenn dieser Differenzdruck größer sein sollte als der obere Schwellwert p_{Uein} des Schwellwertschalters 31, das Drosselorgan 4 nicht wieder geöffnet, weil das Flipflop 35 dies verhindert. Am Ausgang des Schwellwertschalters 31 steht nun HIGH-Signal an, am Ausgang des Inverters 33 und damit am Reset-Eingang R des Flipflops 35 LOW-Signal. Das Ausgangssignal des Flipflops 35 wird durch diesen Signalwechsel also nicht beeinflußt.

Dies ändert sich erst wieder mit dem Eintreffen des nächsten Taktimpulses vom Taktgeber 37. Wegen des UND-Glieds 38 wird ein Taktimpuls des Taktgebers 37 aber nur dann auf die Set-Eingänge S der Flipflops 34 und 35 durchgeschaltet, wenn der Wandler 36 an seinem Ausgang 44 HIGH-Signal hat. Dieser Zustand kann nur dann auftreten, wenn das Eingangssignal an seinem Eingang 42 von Null verschieden ist. Ist das der Fall, so werden die beiden Flipflops 34 und 35 wieder gesetzt. Dadurch erscheint auch wieder HIGH-Signal am Ausgang des UND-Glieds 39 und folglich öffnet der Antrieb 3 wiederum das Drosselorgan 4. Es ist also festzustellen, daß nach dem Abfall der Druckdifferenz unter den Wert p_{Uaus} das Drosselorgan 4 so lange geschlossen bleibt, bis der nächste Taktimpuls vom Taktgeber 37 eintrifft.

Ein analoger Vorgang wird ausgelöst, wenn die Temperaturdifferenz unter den Wert T_{Uaus} fällt. Analog zum eben Beschriebenen wird dadurch das Flipflop 34 zurückgesetzt, wodurch das Drosselorgan schließt, und anschließend wird durch das Flipflop 34 verhindert, daß das Drosselorgan 4 vor dem Eintreffen des nächsten Taktimpulses vom Taktgeber 37 öffnet.

Mit diesen Maßnahmen wird erreicht, daß das Drosselorgan 4 geschlossen bleibt, wenn der Differenzdruck und/oder die Temperaturdifferenz so klein werden, daß sie nicht mehr mit genügender Genauigkeit erfaßbar sind. Damit läßt sich die Zuverlässigkeit der Erfassung von Durchfluß und Wärmemenge verbessern, die Meßfehler werden insgesamt kleiner.

Das Drosselorgan 4 der Fig. 1 kann nur zwei Stellungen einnehmen: geschlossen (Stellung 0) und offen (Stellung I). Es ist vorteilhaft, wenn das Drosselorgan 4 so beschaffen ist, daß es mehrere verschiedene Offen-Stellungen mit verschiedenen wirksamen Querschnitten einnehmen kann. Bei Durchflußmeß- und steuersystemen nach dem Prinzip der Wirkdruckmessung besteht grundsätzlich das Problem, daß die Erfassungsgröße Druckdifferenz eine Wurzelfunktion der gewünschten Größe Strömungsgeschwindigkeit darstellt. Das Problem äußert sich in der erzielbaren Genauigkeit der Messung. Erfolgt die Messung des Differenzdruckes genügend genau in einem Bereich zwischen 10 und 100 % des Nenndurchflusses der Meßeinrichtung, also in einem Bereich 1 : 10, so stehen die zugehörigen Strömungsgeschwindigkeiten im Verhältnis 1 : √10. Daraus folgt, daß gewöhnliche Meßeinrichtungen für Strömungsgeschwindigkeiten nur einen kleinen Meßbereich mit genügender Meßgenauigkeit besitzen. Daraus folgt ein entsprechend kleiner Meßbereich auch bei der Wärmemengenerfassung.

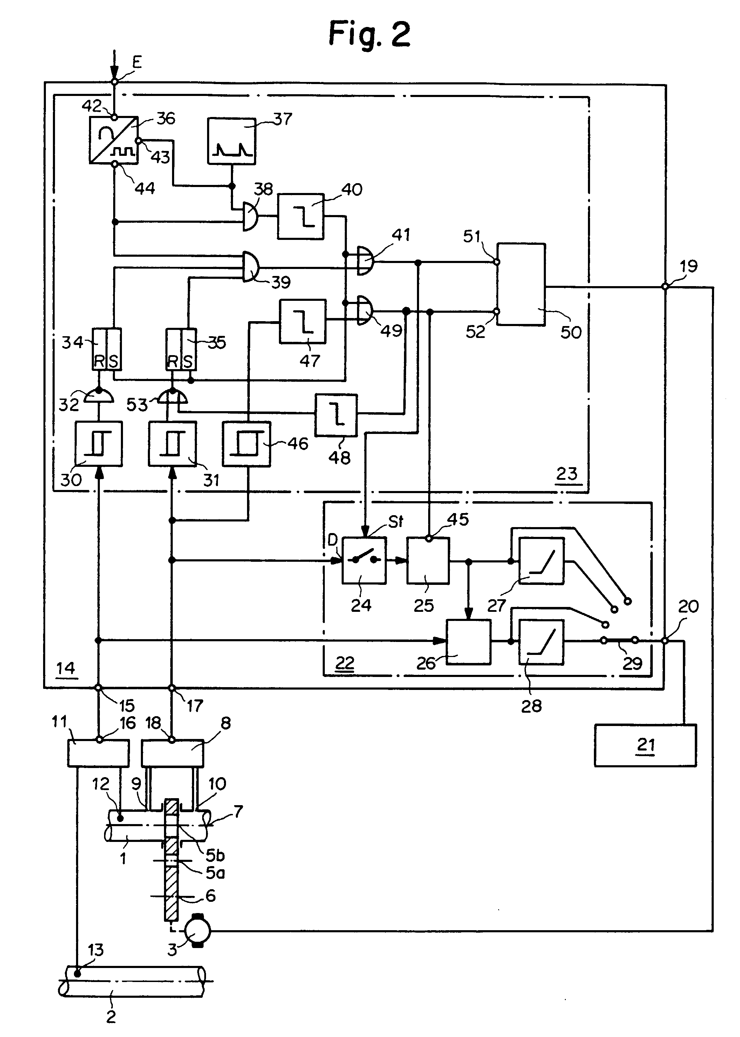

Durch die Maßnahme, mehrere verschieden große wirksame Öffnungsquerschnitte mit verschiedenen Strömungswiderständen vorzusehen, kann eine Vergrößerungen des Meßbereichs erreicht werden. Die Fig. 2 zeigt ein Drosselorgan mit zwei verschieden großen Öffnungen 5a und 5b. Neben der schon beim Ausführungsbeispiel der Fig. 1 genannten Stellung 0 (Drosselorgan 4 geschlossen; Achse 6 fluchtet mit der Mittelache 7 der Vorlaufleitung 1) kann dieses Drosselorgan zwei verschiedene Offen-Stellungen einnehmen, nämlich eine erste Stellung I, bei der der kleinere Querschnitt 5a wirksam ist, und eine zweite Stellung II, bei der der größere Querschnitt 5b wirksam ist.

Um ein solches dreistufiges Drosselorgan ansteuern zu können, bedarf es eines geringen Mehraufwandes beim Rechner 14. Der Rechner 14 gemäß Fig. 2 weist in seinem Rechenblock 22 einen einzigen Unterschied zu jenem der Fig. 1 auf: Der Multiplizierer 25 hat einen zusätzlichen Eingang 45, dessen Bedeutung später erläutert wird.

Weitere Unterschiede zwischen Fig. 1 und Fig. 2 betreffen den Steuerblock 23. Hier sind ein zusätzlicher Schwellwertschalter 46, weitere Verzögerungsglieder 47 und 48, ein weiteres ODER-Glied 49 und ein weiterer Wandler 50 mit Eingängen 51 und 52 vorhanden. Anstelle des Inverters 33 ist ein NOR-Glied 53 vorhanden. Beide Verzögerungsglieder 47 und 48 bewirken eine Abfallverzögerung, so daß ein HIGH-Impuls durch sie verlängert wird.

Der Schwellwertschalter 46 hat folgendes Schaltverhalten: Unterhalb eines Differenzdrucks pₐᵤₛ hat sein Ausgang LOW-Signal. Bei steigendem Wert des Differenzdrucks wechselt sein Ausgangssignal von LOW auf HIGH, sobald der Differenzdruck über den oberen Schwellenwert pₑᵢₙ steigt, und bei dann fallendem Wert des Differenzdrucks wechselt sein Ausgangssignal von HIGH auf LOW, sobald der Differenzdruck wieder unter den unteren Schwellenwert pₐᵤₛ fällt. Es besteht also eine Hysterese der Größe pₑᵢₙ - pₐᵤₛ. Die Schwellenwerte pₐᵤₛ und pₑᵢₙ sind dabei größer als der Schwellenwert p_{Uein}.

Bevor auf die Wirkungsweise insgesamt eingegangen wird, sei noch die Funktion des Wandlers 50 beschrieben. Dieser Wandler 50 hat zwei Eingänge 51 und 52, an denen je nach Schaltzustand der vorgeschalteten Glieder entweder LOW- oder HIGH-Signal anliegen kann. Es handelt sich also um zwei Zweipunkt-Signale. Diese werden nun vom Wandler 50 in ein Dreipunkt-Signal umgewandelt. Liegt an dem mit dem ODER-Glied 41 verbundenen Eingang 51 LOW-Signal an, so führt auch der Ausgang des Wandlers 50 LOW-Signal, und zwar unabhängig vom Zustand des anderen Eingangs. Liegt an dem mit dem ODER-Glied 41 verbundenen Eingang 51 HIGH-Signal und an dem mit dem ODER-Glied 49 verbundenen Eingang 52 LOW-Signal an, so führt der Ausgang des Wandlers 50 ein Signal EINS. Liegt an beiden Eingängen des Wandlers 50 HIGH-Signal an, so führt der Ausgang des Wandlers 50 ein Signal ZWEI.

Der Ausgang des Wandlers 50 kann also drei Zustände annehmen: die Signale LOW, EINS und ZWEI. Der Ausgang des Wandlers 50 wirkt auf den Antrieb 3, der ebenfalls drei Stellungen annehmen kann: Stellung 0 (geschlossen), Stellung I (kleinere Öffnung) und Stellung II (größere Öffnung). Die Wirkungsweise ist nun die, daß der Wandler 50 den Antrieb 3 in die Stellung 0 steuert, wenn sein Ausgang LOW ist, daß er ihn in die Stellung I steuert, wenn sein Ausgang Signal EINS führt, und daß er ihn in die Stellung II steuert, wenn sein Ausgang Signal ZWEI führt.

Hinsichtlich der Verbindungen der einzelnen Schaltungsglieder bestehen bei der Fig. 2 gegenüber der Fig. 1 folgende Abweichungen: Der dritte Schwellwertschalter 46 ist wie der Schwellwertschalter 31 an den Eingang 17 angeschlossen. Sein Ausgang führt zum Eingang des Verzögerungsglieds 47.

Der Ausgang des Schwellwertschalters 31 ist an einen der Eingänge des NOR-Glieds 53 angeschlossen, dessen zweiter Eingang mit dem Ausgang des Verzögerungsglieds 48 und dessen Ausgang mit dem Reset-Eingang R des Flipflops 35 verbunden ist. Außerdem besteht eine Verbindung zwischen dem Ausgang des ODER-Glieds 49 und dem Eingang des Verzögerungsglieds 48.

Der eine Eingang des ODER-Glieds 49 ist mit dem Ausgang des Verzögerungsglieds 47 verbunden, der andere mit dem Ausgang des Verzögerungsglieds 40. Der Ausgang des ODER-Glieds 41 führt hier nicht direkt zum Ausgang 19, sondern ist mit dem Eingang 51 des Wandlers 50 verbunden. An dessen zweiten Eingang 52 ist der Ausgang des ODER-Glieds 49 geführt, der auch mit dem Eingang 45 des Multiplizierers 25 verbunden ist. Schließlich besteht noch eine Verbindung zwischen dem Ausgang des Wandlers 50 und dem Ausgang 19 des Rechners 14.

Nachfolgend wird die Wirkungsweise dieser Vorrichtung beschrieben, soweit sie über jene der Vorrichtung der Fig. 1 hinausgeht: Es sei angenommen, das Drosselorgan 4 befinde sich in der Stellung I, bei der die Öffnung 5a wirksam ist. Für diese Stellung ist es Bedingung, daß die beiden Flipflops 34 und 35 gesetzt sind und am Ausgang 44 des Wandlers 36 HIGH-Signal erscheint. Dann führt der Ausgang des ODER-Glieds 41 HIGH-Signal, also auch der Eingang 51 des Wandlers 50. Außerdem muß der Ausgang des Schwellwertschalters 46 LOW-Signal führen, so daß auch der Ausgang des ODER-Glieds 49 und somit der Eingang 52 des Wandlers 50 LOW-Signal führen. Damit ist der Ausgang des Wandlers 50 im Zustand EINS.

Da der Eingang 52 des Wandlers 50 und der Eingang 45 des Multiplizierers 25 miteinander verbunden sind, liegt am Eingang 45 das gleiche Signal an, das auch am Eingang 52 anliegt. Aus dem zuvor schon Beschriebenen läßt sich ableiten, daß das Signal am Eingang 45 dann LOW ist, wenn sich das. Drosselorgan 4 in der Stellung I (Öffnung 5a wirksam) befindet, und dann HIGH, wenn es sich in der Stellung II (Öffnung 5b wirksam) befindet. Der Multiplizierer 25 hat nun zu jedem dieser Zustände, also zu jeder dieser Stellungen, einen das Durchflußverhalten der jeweiligen Stellungen charakterisierenden Beiwert gespeichert: einen ersten Beiwert für die Stellung I und einen zweiten Beiwert für die Stellung II. Der Multiplizierer 25 multipliziert diesen Beiwert mit dem Differenzdrucksignal, das ihm von Analogschalter 24 zugeliefert wird. Es wird also mit dem ersten Beiwert multipliziert, wenn sich der Eingang 45 im LOW-Zustand befindet, und mit dem zweiten Beiwert, wenn sich der Eingang 45 im HIGH-Zustand befindet.

Es sei nun angenommen, der Differenzdruck steige über den Wert pₑᵢₙ. Dadurch wechselt der Ausgang des Schwellwertschalters 46 von LOW auf HIGH. Das HIGH-Signal erscheint auch am Ausgang des ODER-Glieds 49 und somit am Eingang 52 des Wandlers 50. Dadurch wird der Antrieb 3 so bewegt, daß das Drosselorgan 4 in die Stellung II gelangt, bei der die Öffnung 5b wirksam ist. Gleichzeitig erscheint das HIGH-Signal auch am Eingang 45 des Multiplizierers 25, so daß nun der Beiwert für die Stellung II bei der Multplikation berücksichtigt wird.

Fällt der Differenzdruck anschließend unter den Wert pₐᵤₛ, so wechselt der Ausgang des Schwellwertschalters 46 von HIGH wieder auf LOW. Dadurch wird der Antrieb 3 wieder so angesteuert, daß er das Drosselorgan 4 in die Stellung I bringt. Gleichzeitig wechselt das Signal am Eingang 45 des Multiplizierers 25 wieder auf LOW, so daß nun der Beiwert für die Stellung I bei der Multiplikation berücksichtigt wird. Nach der durch das Verzögerungsglied 48 bewirkten Verzögerungszeit fällt dessen Ausgang auf LOW, so daß damit das Ausgangssignal des Flipflops 35 durch den Ausgang des Schwellwertschalters 31 bestimmt wird.

Wenn der Differenzdruck weiter fällt und zwar unter den Wert p_{Uaus}, so geht der Ausgang des Schwellwertschalters 31 von HIGH auf LOW. Dadurch wechselt das Ausgangssignal des NOR-Glieds 53 von LOW auf HIGH, weil gleichzeitig wie zuvor beschrieben der mit dem Ausgang des Verzögerungsglieds 48 verbundene Eingang des NOR-Glieds 53 auf LOW liegt. Das HIGH-Signal setzt das Flipflop 35 zurück. Damit wird auch das UND-Glied 39 gesperrt, der Ausgang des ODER-Glieds 41 wechselt auf LOW und somit wird der Antrieb 3 in die Stellung 0 gesteuert. Diese Stellung wird bis zum nächsten Taktimpuls durch den Taktgeber 37 beibehalten.

Durch die beiden Stellungen I und II mit den unterschiedlich großen wirksamen Querschnitten wird in vorteilhafter Weise der Bereich der genauen Durchflußmessung bedeutend erweitert. Es ist auch möglich, mehr als zwei unterschiedliche große Querschnitte wirksam werden zu lassen. Es sind dann zusätzliche Schwellwertschalter mit anderen Grenzen, ein Multiplizierer mit mehr als zwei Beiwerten und eine Kombination Wandler 50/Antrieb 3 mit mehr als zwei Offen-Stellungen nötig.

Es sei noch erwähnt, daß durch ein Taktsignal des Taktgebers 37 bei gleichzeitig von Null verschiedenem Signal am Eingang E unabhängig von der zuletzt vorliegenden Stellung des Drosselorgans 4 durch die ODER-Glieder 41 und 49 beide Eingänge 51, 52 des Wandlers 50 HIGH-Signal erhalten, so daß das Drosselorgan 4 zwangsweise in die Stellung II gesteuert wird. Nach Wegfall des Taktimpulses wird das Drosselorgan jene Stellung einnehmen, die sich aufgrund des wirksamen Differenzdrucks und der wirksamen Temperaturdifferenz entsprechend dem Schaltverhalten der drei Schwellwertschalter 30, 31, 46 ergibt.

Bemerkt sei außerdem, daß es möglich ist, die beschriebene Vorrichtung auch allein als Meßeinrichtung für Durchflüsse und/oder Wärmemengen zu verwenden, also unter Fortfall der Steuerfunktion. Dies wird dadurch erreicht, daß an den Eingang E dauernd das Signal 1 angelegt wird.

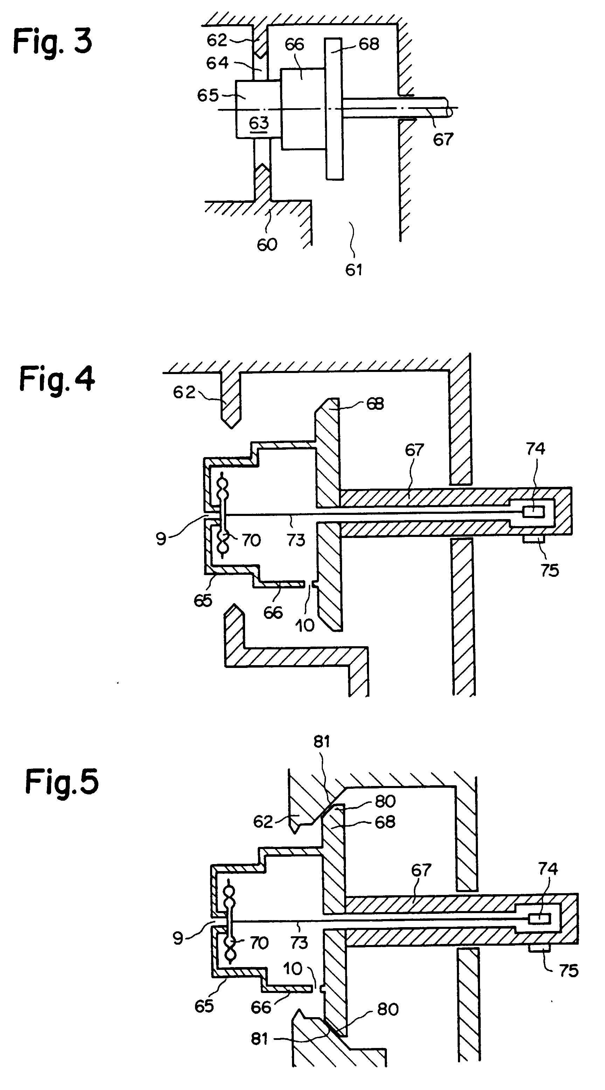

Die Fig. 3 zeigt eine vorteilhafte Ausführungsform eines schaltbaren Drosselorgans mit drei Stellungen. Ein Gehäuse 60 umschließt einen Strömungskanal 61 für das Strömungsmedium. Im Zuge des Strömungskanals 61 ist eine Kreislochblende 62 quer zur Strömungsrichtung angeordnet. In die Öffnung der Kreislochblende 62 taucht ein Verdrängungskörper 63 ein, wodurch ein Ringspalt 64 offen bleibt, der den wirksamen Querschnitt des Drosselorgans darstellt. Der Verdrängungskörper 63 besteht aus einzelnen Zylindern 65, 66 mit diskret abgestuften Außendurchmessern. Der Verdrängungskörper 63 ist mittels einer Welle 67 im Gehäuse 60 längs seiner Achse seitenverschieblich gelagert, wobei die Position des Verdrängungskörpers 63 durch den Antrieb 3 (Fig. 1 und 2) verändert werden kann. Der Verdrängungskörper 63 umfaßt noch einen Teller 68, dessen Außendurchmesser größer ist als die Öffnung der Kreislochblende 62, so daß die Kreislochblende 62 durch diesen Teller 68 verschließbar ist. Diese Position entspricht der Stellung 0. Befindet sich der Zylinder 66 innerhalb der Kreislochblende 62, ohne daß der Teller 68 an der Kreislochblende 62 anliegt, so entspricht dies der Stellung I. Befindet sich der Zylinder 65 innerhalb der Kreislochblende 62, wie die Fig. 3 dies zeigt, so entspricht dies der Stellung II. Es besteht eine Analogie zu den unterschiedlich großen Öffnungen 5a und 5b des zweiten (Fig. 2) Ausführungsbeispiels bzw. zur Stellung ohne Öffnung (Fig. 1).

Es ist möglich, statt der dargestellten zwei unterschiedlich großen Zylinder 65, 66 deren drei oder mehr vorzusehen, um damit mehrere verschieden große Ringspalte 64 zu verwirklichen. Das Drosselorgan ist damit mehrstufig schaltbar.

Diese Ausführungsform hat den Vorteil, daß bei ihr keine besonderen Abdichtungsprobleme bestehen, da lediglich die Welle 67 durch das Gehäuse geführt und abgedichtet werden muß. Außerdem ist die Genauigkeit der Positionierung des Verdrängungskörpers 63 unkritisch. Kleinere Unterschiede in der Position des Verdrängungskörpers 63 beeinflussen die Größe des Ringspaltes 64 nicht. Deshalb kann auch der Antrieb 3 in vorteilhafter Weise sehr einfach ausgeführt sein. Zudem verändern thermisch bedingte Hubänderungen die Größe des Ringspaltes 64 nicht.

Es ist vorteilhaft, die Kreislochblende 62 an ihrem inneren Rand scharfkantig auszuführen. Damit wird die Unempfindlichkeit gegen Ungenauigkeiten in der Position des Verdrängungskörpers 63 weiter gesteigert.

Es ist vorteilhaft, die Mittel zur Erfassung der Druckdifferenz innerhalb des Verdrängungskörpers 63 anzuordnen. Die Fig. 4 zeigt den Aufbau eines solchen Verdrängungskörpers 63. Innerhalb des Verdrängungskörpers 63 befindet sich ein Druckmeßelement 70, das formschlüssig mit dem Verdrängungskörper 63 verbunden ist und über die erste Öffnung 9 und die zweite Öffnung 10 mit den in der Strömungsrichtung vor und hinter der Kreislochblende 62 liegenden Räumen in Verbindung steht, so daß auf das Druckmeßelement 70 direkt der Differenzdruck wirkt. Die Verformung des Druckmeßelements 70 wird über eine Stange 73 direkt auf ein aus einem Magneten 74 und einer Hallsonde 75 bestehendes Meßsystem übertragen. Die Druckdifferenz wird somit in einen Weg umgeformt, dessen Wert als Spannung an der Hallsonde 75 abgegriffen werden kann. Dieser Spannungswert kann, wie bei den Ausführungsbeispielen nach den Fig. 1 und 2 angegeben, an den Rechner 14 übermittelt werden.

Es ist außerdem vorteilhaft, wenn die Öffnungen 9 und 10 so angeordnet sind, daß sie in Strömungsrichtung gesehen auf einer Seite des durch den Teller 68 verschlossenen Drosselorgans liegen, wie dies in der Fig. 5 dargestellt ist. Der Teller 68 weist eine Dichtfläche 80 auf, die in der Schließstellung (Stellung 0) gegen einen Sitz 81 im Gehäuse 60 drückt. Damit wird erreicht, daß bei geschlossenem Ventil der Differenzdruck am Druckmeßelement 70 immer Null ist. Dadurch bietet sich die Möglichkeit, das Ausgangssignal des aus dem Magneten 74 und der Hallsonde 75 bestehenden Meßsystems auf Null abzugleichen. Dieser Abgleich kann mit Vorteil innerhalb des Rechners 14 erfolgen, und zwar immer dann, wenn das Drosselorgan die Stellung 0 erreicht. Somit ist ein geschlossenem Drosselorgan 4 eine Korrektur des Meßwertes der Druckdifferenz ausführbar.

Bei den vorstehend genannten Ausführungsbeispielen ist das Drosselorgan 4 mitsamt den zugehörigen Elementen in der Vorlaufleitung 1 eines Heizkreises eingebaut. Es ist aber auch möglich, das Drosselorgan 4 in die Rücklaufleitung 1 einzubauen.

## Patentansprüche

1. Vorrichtung zum Steuern und Messen des Durchflusses eines Strömungsmediums,
mit einem Drosselorgan (4, 62, 63), das zwischen einer definierten Schließstellung und mindestens einer definierten geöffneten Offenstellung von einem Antrieb (3) umschaltbar ist,
mit Mitteln zum Erfassen (8, 70, 74, 75) der Druckdifferenz vor und hinter dem Drosselorgan (4, 62, 63) und Mitteln (11, 12, 13) zum Erfassen der Temperatur des Strömungsmediums, mit einem Rechner (14), der die Erfassungsdaten in ein zur Steuerung des Antriebs (3) geeignetes Signal umrechnet,
und mit einem Umsetzer (36) zum Umsetzen der Eingangsdaten des Rechners (14), wobei der Umsetzer (36) ein stetiges Steuersignal umsetzt,
**dadurch gekennzeichnet**,
daß der Rechner (14) einen Rechenblock (22), einen Steuerblock (23), von dem ein Ausgang (19) mit dem Antrieb (3) und mit einem Steuereingang (St) des Rechenblocks (22) zur Weitergabe eines Drosselstellungssignals verbunden ist, und Mittel (33, 35, 53) aufweist, durch die das Drosselorgan (4, 62, 63) unabhängig von der tatsächlichen Druckdifferenz in der Schließstellung haltbar ist,
daß der Umsetzer (36) das stetige Steuersignal in ein Puls-Pausen-Signal umsetzt, das zur Steuerung des Steuerblockes (23) dient, von dessen Ausgang (19) ein Puls-Pausen-Signal den Antrieb (3) derart steuert, daß der Antrieb (3) das Drosselorgan (4, 62, 63) während der Zeitdauer der Impulspause in die Schließstellung und während der Zeitdauer eines Impulses in die Offenstellung schaltet,
und daß der Steuerblock (23) einen Schwellwertschalter (31) aufweist, durch den das Drosselorgan (4, 62, 63) in die Schließstellung steuerbar ist, wenn eine minimale Druckdifferenz (p_{Uaus}) unterschritten wird.

2. Vorrichtung nach Anspruch 1, dadurch gekennzeichnet, daß der Rechenblock (22) auch das Messen und das Steuern von Wärmemengen unter Verknüpfung des Drosselstellungssignals und von Erfassungsdaten der Druckdifferenz und der Temperaturen in der Vorlaufleitung (7) und in der Rücklaufleitung (2) eines Heizkreises ermöglicht.

3. Vorrichtung nach Anspruch 1 oder 2,
**dadurch gekennzeichnet**,
daß das Drosselorgan (4; 62, 63) zwei definierte unterschiedlich weit geöffnete Stellungen als Arbeitsstellungen einnimmt.

4. Vorrichtung nach einem der Ansprüche 1 bis 3,
**dadurch gekennzeichnet**,
daß der Rechner (14) einen von einem Taktgeber (37) synchronisierbaren Wandler (36) als Umsetzer aufweist.

5. Vorrichtung nach einem der Ansprüche 1 bis 4, dadurch gekennzeichnet, daß der Rechner (14) einen weiteren Schwellwertschalter (30) aufweist, durch den das Drosselorgan (4; 62, 63) bei Unterschreiten einer minimalen Temperaturdifferenz (T_{Uaus}) in die Schließstellung steuerbar ist.

6. Vorrichtung nach Ansprüch 1, dadurch gekennzeichnet, daß das Drosselorgan (4; 62, 63) neben der Schließstellung mindestens zwei verschiedene Offen-Stellungen mit diskret abgestuften Querschnitten (5a, 5b; 64) aufweist, daß das Drosselorgan (4; 62, 63) durch mindestens einen weiteren Schwellwertschalter (46) ansteuerbar ist und daß in einem Multiplizierer (25) zu jedem dieser Querschnitte (5a, 5b; 64) ein das Durchflußverhalten charakterisierender Beiwert abgespeichert ist, mit dem der Meßwert des Differenzdrucks multiplizierbar ist.

7. Vorrichtung nach Anspruch 6, dadurch gekennzeichnet, daß das Drosselorgan aus einer Kreislochblende (62) und einem in dieser verschiebbar angeordneten Verdrängungskörper (63) mit diskret abgestuften Querschnitten (65, 66) besteht.

8. Vorrichtung nach Anspruch 7, dadurch gekennzeichnet, daß die Kreislochblende (62) scharfkantig ist.

9. Vorrichtung nach Anspruch 7 oder 8, dadurch gekennzeichnet, daß der Verdrängungskörper (63) rotationssymmetrisch ist und längs seiner Achse (67) aus einzelnen Zylindern (65, 66) mit diskret abgestuften Außendurchmessern besteht.

10. Vorrichtung nach einem der Ansprüche 7 bis 9, dadurch gekennzeichnet, daß die Mittel (70) zur Erfassung der Druckdifferenz innerhalb des Verdrängungskörpers (63) angeordnet sind.

11. Vorrichtung nach Anspruch 10, dadurch gekennzeichnet, daß der Verdrängungskörper (63) einen Teller (68) mit einer Dichtfläche (80) aufweist, der gegen einen im Gehäuse (60) angeordneten Sitz (81) bewegbar ist, und daß Öffnungen (7, 8), durch die ein Differenzdrucksensor (8) mit den Räumen vor und hinter dem Drosselorgan (4; 62, 63) verbunden ist, auf der bezogen auf die Strömungsrichtung gleichen Seite des Tellers (68) angeordnet sind.

12. Vorrichtung nach Anspruch 11, dadurch gekennzeichnet, daß durch den Rechner (14) bei geschlossenem Drosselorgan (4; 62, 63) eine Korrektur des Meßwertes der Druckdifferenz ausführbar ist.

## Claims

1. Apparatus for controlling and measuring the flow rate of a flow medium, comprising
a throttle member (4, 62, 63) which can be switched over by a drive (3) between a defined closed position and at least one defined opened open position
means (8, 70, 74, 75) for detecting the pressure difference upstream and downstream of the throttle member (4, 62, 63) and means (11, 12, 13) for detecting the temperature of the flow medium,
a computer (14) which converts the detection data into a signal suitable for controlling the drive (3), and
a converter (36) for converting the input data of the computer (14), wherein the converter (36) converts a continuous control signal,
characterised in that
the computer (14) has a computing block (22), a control block (23) of which an output (19) is connected to the drive (3) and to a control input (St) of the computing block (22) for the transmission of a throttle position signal, and means (33, 35, 53) by which the throttle member (4, 62, 63) can be held in the closed position irrespective of the actual pressure difference,
the converter (36) converts the continuous control signal into a pulse-space signal which serves to control the control block (23) from whose output (19) a pulse-space signal controls the drive (3) in such a way that the drive (3) switches the throttle member (4, 62, 63) into the closed position during the duration of the pulse space and into the open position during the duration of a pulse, and
the control block (23) has a threshold switch (31) by which the throttle member (4, 62, 63) can be controlled into the closed position when the pressure difference falls below a minimum pressure difference (P_{Uaus}).

2. Apparatus according to claim 1 characterised in that the computing block (22) also permits measurement and control of amounts of heat with interlinking of the throttle position signal and detection data in respect of the pressure difference and the temperatures in the feed conduit (7) and in the return conduit (2) of a heating circuit.

3. Apparatus according to claim 1 or claim 2 characterised in that the throttle member (4; 62, 63) assumes two defined positions of being open to different widths, as working positions.

4. Apparatus according to one of claims 1 to 3 characterised in that the computer (14) has a converter (36) which is synchronisable by a clock (37), as the converter for converting the input data of the computer.

5. Apparatus according to one of claims 1 to 4 characterised in that the computer (14) has a further threshold switch (30) by which the throttle member (4; 62, 63) is controllable into the closed position when the temperature difference falls below a minimum temperature difference (T_{Uaus}).

6. Apparatus according to claim 1 characterised in that the throttle member (4; 62, 63), besides the closed position, has at least two different open positions with discretely stepped cross-sections (5a, 5b; 64), that the throttle member (4; 62, 63) is actuable by at least one further threshold switch (46) and that stored in a multiplier (25) for each of said cross-sections (5a, 5b; 64) is a factor which characterises the flow condition and by which the measurement value in respect of the differential pressure can be multiplied.

7. Apparatus according to claim 6 characterised in that the throttle member comprises a circular aperture (62) and a displacement body (63) which is arranged displaceably therein and which has discretely stepped cross-sections (65, 66).

8. Apparatus according to claim 7 characterised in that the circular aperture (62) is sharp-edged.

9. Apparatus according to claim 7 or claim 8 characterised in that the displacement body (63) is rotationally symmetrical and along its axis (67) comprises individual cylinders (65, 66) with discretely stepped outside diameters.

10. Apparatus according to one of claims 7 to 9 characterised in that the means (70) for detecting the pressure difference are arranged within the displacement body (63).

11. Apparatus according to claim 10 characterised in that the displacement body (63) has a disc (68) with a sealing surface (80) which is movable against a seat (81) arranged in the housing (60) and that openings (9, 10) through which a differential pressure sensor (8) is connected to the spaces upstream and downstream of the throttle member (4; 62, 63) are arranged on the same side of the disc (68) with respect to the flow direction.

12. Apparatus according to claim 11 characterised in that a correction of the measurement value in respect of the pressure difference can be performed by the computer (14) when the throttle member (4; 62, 63) is closed.

## Revendications

1. Dispositif de contrôle et de mesure du débit d'un fluide comprenant
un organe de régulation (4 ; 62, 63), qui peut être commandé par un moteur (3) pour passer d'une position de fermeture définie vers au moins une position d'ouverture définie,
des éléments de mesure (8, 70, 74, 75) de la différence de pression devant et derrière l'organe de régulation (4 ; 62, 63) et des éléments (11, 12, 13) pour mesurer la température du fluide,
un ordinateur (14), qui transforme les données enregistrées en un signal adapté à la commande du moteur (3),
et un convertisseur (36) pour convertir les données entrées dans l'ordinateur (14), le convertisseur (36) étant destiné à convertir un signal de commande analogique,
caractérisé
en ce que l'ordinateur (14) comprend un bloc fonctionnel (22), un bloc de commande (23), dont une sortie (19) est reliée au moteur (3) et à une entrée de commande (St) du bloc fonctionnel (22), afin de transmettre un signal de position de régulation, et des éléments (33, 35, 53), qui permettent de maintenir l'organe de régulation (4 ; 62, 63) en position de fermeture, indépendamment de la différence de pression réelle,
en ce que le convertisseur (36) convertit le signal de commande analogique en un signal d'impulsion-intervalle, qui sert à commander le bloc de commande (23), dont la sortie (19) émet un signal d'impulsion-intervalle qui commande le moteur (3), de telle sorte que le moteur (3) actionne l'organe de régulation (4 ; 62, 63) en position de fermeture pendant la durée de l'intervalle entre deux impulsions et en position d'ouverture pendant la durée d'une impulsion,
et en ce que le bloc de commande (23) est muni d'un commutateur de valeur seuil (31) qui permet d'actionner l'organe de régulation (4 ; 62, 63) en position de fermeture lorsque la différence de pression est inférieure à une valeur minimale (p_{Uaus}).

2. Dispositif selon la revendication 1, caractérisé en ce que le bloc fonctionnel (22) permet aussi de mesurer et de contrôler les quantités de chaleur en liaison avec le signal de la position de régulation et les données enregistrées pour la différence de pression et les températures dans la conduite d'entrée (7) et la conduite de retour (2) d'un circuit de chauffage.

3. Dispositif selon la revendication 1 ou 2, caractérisé en ce que l'organe de régulation (4 ; 62, 63) est actionné dans des positions de travail correspondant à deux positions d'ouverture de diamètre différent.

4. Dispositif selon l'une quelconque des revendications 1 à 3, caractérisé en ce que l'ordinateur (14) est muni d'un convertisseur (36), utilisé en tant que transducteur, qui peut être synchronisé par un générateur de cadence (37).

5. Dispositif selon l'une quelconque des revendications 1 à 4, caractérisé en ce que l'ordinateur (14) comprend un commutateur de valeur seuil supplémentaire (30), qui permet d'actionner l'organe de régulation (4 ; 62, 63) en position de fermeture lorsque la différence de température est inférieure à une valeur minimale (T_{Uaus}).

6. Dispositif selon la revendication 1, caractérisé en ce que l'organe de régulation (4 ; 62, 63) présente, outre la position de fermeture, au moins deux positions d'ouverture différentes avec des sections discrètement décalées (5a, 5b ; 64), en ce que l'organe de régulation (4 ; 62, 63) peut être commandé par au moins un commutateur de valeur seuil supplémentaire (46) et en ce qu'un facteur de correction, caractérisant le débit par rapport à chacune de ces sections (5a, 5b ; 64), est mis en mémoire dans un multiplicateur (25), où il sera multiplié par la valeur de mesure de la pression différentielle.

7. Dispositif selon la revendication 6, caractérisé en ce que l'organe de régulation est formé d'un diaphragme à trou circulaire (62) et d'un organe de régulation (63), monté de manière à pouvoir se déplacer dans ce dernier et formé de sections (65, 66) discrètement décalées.

8. Dispositif selon la revendication 7, caractérisé en ce que le diaphragme à trou circulaire (62) est formé de bords vifs.

9. Dispositif selon la revendication 7 ou 8, caractérisé en ce que l'organe de régulation (63) présente une symétrie de rotation et se compose de plusieurs cylindres (65, 66) aux diamètres extérieurs discrètement décalés et situés le long de son axe (67).

10. Dispositif selon l'une quelconque des revendications 7 à 9, caractérisé en ce que les éléments de mesure de la différence de pression (70) sont montés à l'intérieur de l'organe de régulation (63).

11. Dispositif selon la revendication 10, caractérisé en ce que l'organe de régulation (63) est muni d'un disque (68) formé d'une surface étanche (80), qui peut être déplacée contre un appui (81) réalisé dans le boîtier (60), et en ce que des ouvertures (7, 8), par lesquelles un capteur de pression différentielle (8) communique avec les espaces situés devant et derrière l'organe de régulation (4 ; 62, 63), sont réalisées sur le même côté du disque (68), en considérant le sens d'écoulement.

12. Dispositif selon la revendication 11, caractérisé en ce que l'ordinateur (14) permet d'exécuter, avec un organe de régulation (4 ; 62, 63) fermé, une correction de la valeur de mesure de la différence de pression.
